# EUROPÄISCHE PATENTANMELDUNG

(11) **EP 0 817 474 A1**
(43) Veröffentlichungstag der Anmeldung: **07.01.1998**
(21) Anmeldenummer: 97201752.9
(22) Anmeldetag: 10.06.1997
(51) Int. Cl.: H04N 5/222

(54) **Bediengerät für eine Produktionseinheit eines Fernsehstudios oder eines Fernseh-Übertragungswagens**

(30) Priorität: 28.06.1996 DE 19625954
(71) Anmelder: Philips Patentverwaltung GmbH, 22335 Hamburg (DE); PHILIPS ELECTRONICS N.V., 5621 BA Eindhoven (NL)
(72) Erfinder: Fegesch, Henrik, Röntgenstrasse 24, 22335 Hamburg (DE)
(74) Vertreter: Erdmann, Anton, Dipl.-Ing.

(57) **Zusammenfassung**

Die Erfindung bezieht sich auf ein Bediengerät (10) für eine Produktionseinheit (21) eines Fernsehstudios oder eines Übertragungswagens mit Bedienelementen (13 bis 16) zur Bearbeitung von eingehenden Bildsignalen. Ein einfacher Aufbau eines solchen Bediengerätes und eine leichte Bedienung wird erreicht durch eine Bedienoberfläche (11), die vor Beginn einer Produktion mit den für die Produktion erforderlichen Bedienelementen (13 bis 16) programmgesteuert konfigurierbar ist, wobei die erforderlichen Bedienelemente (13 bis 16) aus den in einem Speicher (12) softwaremäßig hinterlegten Bedienelementen ausgewählt, abgerufen und auf die Bedienoberfläche geladen werden.

## Beschreibung

Die Erfindung bezieht sich auf ein Bediengerät für eine Produktionseinheit eines Fernsehstudios oder eines Fernseh-Übertragungswagens mit Bedienelementen zur Bearbeitung von eingehenden Bildsignalen.

Zur Produktion von Fernsehbeiträgen werden z.B. Mischer benötigt, die in der Regel gleichzeitig Bildsignale mehrerer Quellen je nach den gestalterischen Erfordernissen z.B. eines Videokünstlers miteinander kombinieren. Diese Mischer weisen Eingangskreuzschienen auf, mit deren Hilfe einige der zur Verfügung gestellten Eingangssignale verschiedenen Verarbeitungsschritten zugeführt werden können. Weiterhin weisen derartige Mischer z.B. eine oder mehrere Misch- und Effekteinheiten (ME-Einheiten) auf, um beispielsweise bestimmte Vordergrund-Bildsignale nach einem Chromakey-Verfahren in ein Hintergrund-Bildsignal zu überblenden oder um ein Hintergrundsignal mit dem Signal eines Schriftzeichengenerators zu versehen. Da auf dem Bedienpult eines solchen studiotauglichen Mischers üblicherweise Hunderte von Bedienelementen, z.B. Drucktasten, Drehknöpfe und Überblendhebel, angeordnet sind, weisen die Bedienpulte heutiger Mischergenerationen, z.B. das Bedienpult des BTS-Mischers vom Typ DD3O (siehe BTS-Prospekt Diamond Digital "Produktionsmischer für serielle digitale Komponentensignale"), bereits beträchtliche Abmessungen auf. Eine Vielzahl von Drucktasten ist zudem doppelt oder gar dreifach belegt.

Der Erfindung liegt die Aufgabe zugrunde, ein Bediengerät der eingangs genannten Art zu schaffen, das einfacher aufgebaut, flexibler verwendbar und leichter zu bedienen ist.

Diese Aufgabe wird gemäß der Erfindung bei einem eingangs genannten Bediengerät gelöst durch eine Bedienoberfläche, die vor Beginn einer Produktion mit den für die Produktion erforderlichen Bedienelementen programmgesteuert konfigurierbar ist, wobei die erforderlichen Bedienelemente aus den in einem Speicher softwaremäßig hinterlegten Bedienelementen ausgewählt, abgerufen und auf die Bedienoberfläche geladen werden. Dies bedeutet, daß in einem Studio oder in einem Fernseh-Übertragungswagen vor dem Beginn einer bestimmten Produktion die dafür erforderlichen Bedienelemente auf elektronische Weise ausgewählt, abgerufen und auf die Bedienoberfläche geladen werden. Dabei erfolgt auf elektronische Weise eine Verschaltung mit den Bauelementen der Produktionseinrichtung, und zwar derart, daß bei Betätigung eines dieser Bedienelemente bestimmte gewünschte Steuerfunktionen in der Produktionseinrichtung ausgelöst werden. Bei dem erfindungsgemäßen Bediengerät sind die Bedienelemente also nicht mehr, wie bisher, fest verdrahtet, sondern können je nach dem gewünschten Programm vielfältig miteinander und mit den Bauelementen der Produktionseinrichtung zusammengeschaltet werden. Für einen bestimmten Produktionsvorgang können somit gezielt nur die Bedienelemente ausgewählt werden, die tatsächlich erforderlich sind. Im Vergleich zu den Standard-Bedienpulten mit der oben genannten großen Anzahl von Bedienelementen ergibt sich bei der Bauart gemäß der Erfindung eine übersichtliche Bedienoberfläche und eine raumsparende Bauweise. Bei einem derartigen erfindungsgemäßen Bediengerät handelt es sich um ein sogenanntes virtuelles Bediengerät, d.h. die Bedienelemente sind nicht, wie bisher bei den bekannten Mischpulten, als räumliche Bauteile vorhanden, sondern werden softwaremäßig erstellt.

Gemäß der Erfindung kann somit nunmehr die Anzahl und die Funktion der Bedienelemente gezielt an die Erfordernisse einer bestimmten Fernsehproduktion angepaßt werden. Die Bedienelemente einer Produktionseinheit können flexibel bestimmten Produktionsfunktionen zugeordnet werden und lassen sich individuell an eine Produktion bzw. an die Wünsche einer Bedienperson anpassen.

In zweckmäßiger Ausgestaltung der Erfindung ist vorgesehen,
- daß die Bedienoberfläche ein mit programmierbaren, integrierten Schaltelementen versehener Bildschirm ist,
- daß der Bildschirm mit dem die Bedienelemente softwaremäßig enthaltenden Speicher verbunden ist und
- beim Ladevorgang die jeweils gewünschten Bedienelemente mit den zugehörign grafischen Symbolen softwaremäßig an beliebigen Stellen des Bildschirmes angeordnet werden können.

Die erfindungsgemäße flexible Zuordnung der Bedienelemente weist darüber hinaus den Vorteil auf, daß nicht nur Funktionen der Produktionseinheit erfaßt und gesteuert werden können, sondern auch solche Funktionen, die in einer Produktionseinheit üblicherweise nicht vorhanden sind, z.B. die Steuerfunktionen für Speichermedien, wie Plattenspeicher zur Zuspielung von Bildsignalen.

Durch die freie, programmgesteuerte Konfigurierbarkeit der Bedienelemente kann auf einfache, zweckmäßige und raumsparende Weise die Art, die Lage und die Größe der Bedienelemente auf dem Bildschirm erstellt bzw. festgelegt werden. Wenn also z.B. für eine bestimmte Produktion zunächst die Art der Bedienelemente ausgewählt, abgerufen und auf dem Bildschirm geladen wurde, so können danach diese Bedienelemente je nach Wunsch an jede beliebige Stelle des Bildschirmes gelegt werden. Wenn dabei z.B. nur eine begrenzte Anzahl von Bedienelementen erforderlich ist, die die Größe des gesamten Bildschirmes nicht ausfüllen, so können die grafischen Darstellungen dieser Bedienelemente vergrößert werden, so daß sie den gesamten Bildschirm einnehmen. Dadurch wird die Übersichtlichkeit vergrößert und die Bedienung erleichtert.

Eine einfache Betätigung der virtuell erstellten Bedienelemente auf dem genannten Bildschirm erfolgt z.B. in Ausgestaltung der Erfindung durch Berühren mit einem Finger (Touch-Screen-Technik). Eine derartige Betätigungsweise benötigt keine besondren Zusatzbauelemente und ermöglicht einen schnellen Zugriff zu den Bedienelementen.

Eine andere Art der Betätigung besteht darin, daß die auf dem Bildschirm abgebildeten Bedienelemente durch Anklicken, z.B. durch einen Mausklick betätigbar sind. Vorteilhaft bei dieser Art der Betätigung ist, daß die Bedientasten nicht mehr vor Ort, d.h. am Bediengerät selbst, sondern aus einer gewissen Entfernung betätigt werden können.

Eine weitere Ausgestaltung der Erfindung besteht darin,
- daß die Bedienoberfläche ein Bedienungsfeld mit herkömmlich ausgebildetn und in fester räumlicher Zuordnung angeordneten Drucktasten ist, die mit dem die Bedienelemente softwaremäßig enthaltenden Speicher verbunden sind, und
- daß beim Ladevorgang die jeweils gewünschten Bedienelemente softwaremäßig beliebigen Drucktasten zugeordnet werden können.

Auch bei dieser Bauweise ergibt sich der oben genannte Vorteil, daß jetzt die Anzahl und die Funktion der Bedienelemente gezielt an die Erfordernisse einer bestimmten Fernsehproduktion angepaßt werden können. Auch hierbei können die Bedienelemente einer Produktionseinheit flexibel bestimmten Produktionsfunktionen zugeordnet werden und lassen sich individuell an eine Produktion bzw. an die Wünsche einer Bedienperson anpassen. Im Unterschied zu der oben genannten "virtuellen" Bauweise sind bei dieser Ausgestaltung der Erfindung an bestimmten Stellen mit Hand betätigbare Druckschalter vorgesehen, die jedoch nicht, wie bei den altbekannten Mischpulten, fest verdrahtet sind, sondern erfindungsgemäß individuell mit gewünschten Schaltfunktionen belegt werden können. Auch bei dieser Bauweise ist die Funktion der einzelnen Bedienelement abhängig von der Konfigurierung. Eine solche Bauweise ist z.B. vorteilhaft als Übergangslösung zwischen den altbekannten Mischpulten mit einer Vielzahl von fest verdrahteten Bedienelementen und der oben beschriebenen sogenannten virtuellen Bauweise, wonach die Bedienelemente erstellt und auf dem Bildschirm grafisch dargestellt werden. Diese Bauweise hat bestimmte Vorteilte für solche Anwendungszwecke, bei denen ortsfest angeordnete Drucktasten erforderlich bzw. zweckmäßig sind. Auch diese Tasten-Bauweise ergibt den Vorteil der besseren Raumausnutzung, da auch hier bestimmte Funktionen an bestimmte gewünschte Stellen des Bedienpultes gelegt werden können und da auch hier nur die tatsächlich benötigten Bedienelemente aktiviert werden.

Eine Ausgestaltung der zuletzt genannten Bauweise besteht darin, daß die Bedienelemente mit einer optischen Anzeige versehen sind, durch welche die jeweilige Funktion der entsprechend einem Programm frei konfigurierten Bedienelemente sichtbar ist. Dadurch wird die Bedienung erleichtert und die Übersichtlichkeit verbessert.

Das erfindungsgemäße Bedienelement wird vorzugsweise angewendet bei einer in einem Studio oder einem Übertragungswagen angeordneten Produktionseinheit (Produktionsbox) mit mindestens einer Bildsignalquelle, mit Einrichtungen zur Verarbeitung der Bildsignale und mit Ausgängen für die bearbeiteten Bildsignale,
- wobei die einzelnen Bildsignal-Verarbeitungseinrichtungen als selbständige Baueinheiten unabhängig voneinander in der zentralen Operationseinheit zusammengefaßt sind und
- wobei die Ein- und Ausgänge der Bildsignal-Verarbeitungseinrichtungen mit einer steuerbaren Schalteirrichtung verbunden sind, die eine freie Zuordnung der Bildsignal-Verarbeitungseirichtungen ermöglicht.

Eine derartige Produktionsbox in der Anmeldung PHD 96-092 der Anmelderin näher beschrieben. Mit einer solchen Produktionsbox ergibt sich ein flexibles System zur Produktion von Fernsehbeiträgen, welches nicht durch eine feste, dezentrale Verkabelung eingeengt ist. Damit können die in einem Fernsehstudio oder einem Fernseh-Übertragungswagen vorhandenen Bildsignalquelle und Bildsignal-Verarbeitungseinrichtungen an die jeweiligen Bedürfnisse einer Produktion und/oder einer Bedienperson leicht und problemlos angepaßt werden. Vorhandene und verfügbare Bildsignal-Verarbeitungseinrichtungen können, unabhängig von einer Verkabelung frei konfiguriert und damit optimal genutzt werden. Bei Anwendung der vorliegenden Erfindung auf eine derartige Produktionsbox ergibt sich eine Möglichkeit zur schnellen und einfachen Anpassung des Bediengerätes an die jeweils erforderlichen Bildsignal-Verarbeitungseinrichtungen.

In der Zeichnung sind in den Fig. 1 bis 3 Ausführungsbeispiele gemäß der Erfindung schematisch dargstellt.
Fig. 1 zeigt ein Bediengerät mit einer Bedienoberfläche in einer ersten Gestaltung,
Fig. 2 zeigt ein Bediengerät mit einer Bedienoberfläche in einer zweiten Gestaltung, und
Fig. 3 zeigt eine Produktionsbox.

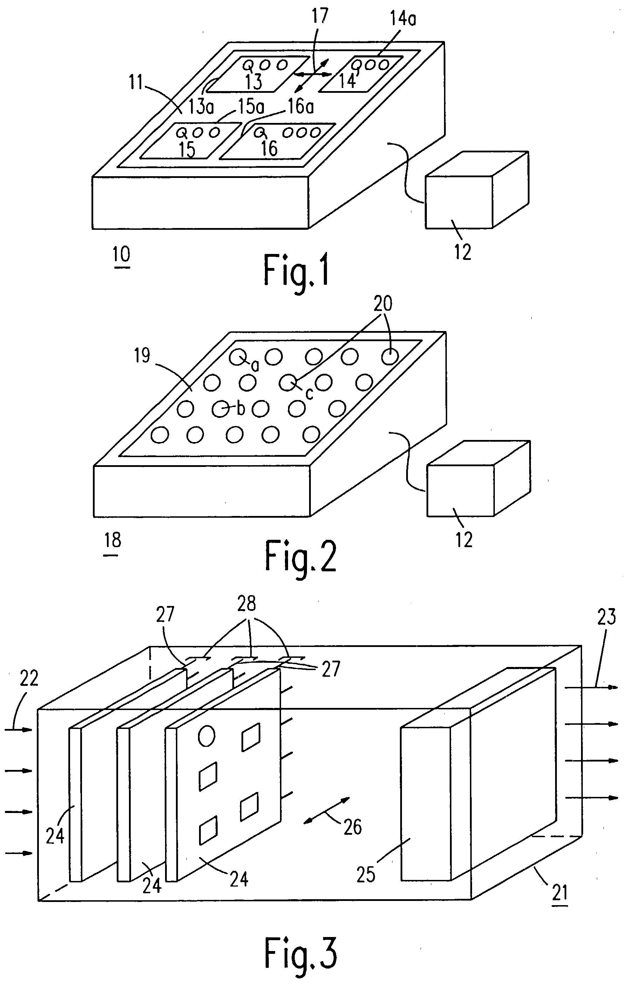

Das Bediengerät 10 gemäß Fig. 1 enthält eine Bedienoberfläche 11, die als Bildschirm mit integrierten, programmierbaren Schaltelementen ausgebildet ist. Das Bediengerät 10 ist mit einem Speicher 12 verbunden, in dem softwaremäßig alle gewünschten Bedienelemente niedergelegt sind. Es können 1-n verschiedene Gruppen von Bedienelementen vorgesehen sein. Im vorliegenden Ausführungsbeispiel ist die Bedienoberfläche 11 so konfiguriert, daß vier verschiedene Gruppen von Bedienelementen 13 bis 16 auf dem Bildschirm 11 angeordnet sind. Die Bedienelemente 13 bis 16 sind jeweils in einem frei konfigurierbaren Feld 13a bis 16a zusammengefaßt. Im vorliegenden Ausführungsbeispiel sind die Bedienelemente 13 für das Editing, die Bedienelemente 14 für Mini Pool, die Bedienelemente 15 für Mischer und die Bedienelemente 16 für DVE-Geräte vorgesehen. Die Bedienelemente 13 bis 16 können auf dieser virtuellen Bedienoberfläche 11 nach Größe und Lage in Richtung der Pfeile 17 frei verändert werden. Es ist ebenfalls möglich, die in einem der Felder 13a bis 16a zusammengefaßten Bedienelemente als Einheit auf der Bedienoberfläche zu verschieben.

Fig. 2 zeigt ein Bediengerät 18 mit einer Bedienoberfläche 19, die in fester räumlicher Zuordnung angeordnete Bedienelemente 20 aufweist. Auch dieses Bediengerät 18 ist mit dem Speicher 12 verbunden, in dem die erforderlichen Bedienelemente softwaremäßig abgespeichert sind. Auch hierbei ist die Funktion der einzelnen, in konventioneller Hardware-Technik ausgebildeten Bedienelemente 20 abhängig von der Konfigurierung. Die jeweilige Funktion der einzelnen Bedienelemente 20 kann durch optische Anzeigen a, b oder c an oder auf den Bedienelementen 20 sichtbar gemacht werden.

Fig. 3 zeigt eine Produktionsbox 21 zur Produktion von Fernsehbeiträgen in einem Studio oder in einem Übertragungswagen. Diese Produktionsbox 21 ist eingangsseitig mit mehreren Bildsignalquellen 22, z.B. Kameras oder Magnetbandaufzeichnungsgeräte, und ausgangsseitig mit Signalausgängen 23, z.B. für Antennen oder Monitore, versehen. Die Produktionsbox 21 dient in einem Studio oder in einem Übertragungswagen als zentrale Operationseinheit mit im Innern angeordneten Signal-Verarbeitungseinrichtungen 24, z.B. Mischerstufen, Videoeffektgeräte, Schriftgeneratoren usw.. Mit 25 ist eine steuerbare Schalteinrichtung für diese Bildsignal-Verarbeitungseinrichtungen 24 bezeichnet. Zur Bedienung dieser Produktionseinheit 21 dienen die in Fig. 1 und 2 dargestellten Bediengeräte 10 und/oder 18, die mit entsprechenden Leitungen mit der Produktionsbox verbunden sind.

## Patentansprüche

1. Bediengerät (10, 18) für eine Produktionseinheit (21) eines Fernsehstudios oder eines Übertragungswagens mit Bedienelementen (13 bis 16, 20) zur Bearbeitung von eingehenden Bildsignalen, gekennzeichnet durch eine Bedienoberfläche (11, 19), die vor Beginn einer Produktion mit den für die Produktion erforderlichen Bedienelementen (13 bis 16, 20) programmgesteuert konfigurierbar ist, wobei die erforderlichen Bedienelemente (13 bis 16, 20) aus den in einem Speicher (12) softwaremäßig hinterlegten Bedienelementen ausgewählt, abgerufen und auf die Bedienoberfläche (11, 19) geladen werden.

2. Bediengerät nach Anspruch 1, dadurch gekennzeichnet,
- däß die Bedienoberfläche (11) ein mit programmierbaren, integriereten Schaltelementen versehener Bildschirm ist,
- daß der Bildschirm mit dem die Bedienelemente (13 bis 16) softwaremäßig enthaltenden Speicher (12) verbunden ist und
- daß beim Ladevorgang die jeweils gewünschten Bedienelemente (13 bis 16) mit den zugehörigen grafischen Symbolen (a, b, c) softwaremäßig an beliebigen Stellen des Bildschirmes (11) angeordnet werden können.

3. Bediengerät nach Anspruch 2, dadurch gekennzeichnet, daß die auf dem Bildschirm (11) abgebildeten Bedienelemente (13 bis 16) durch Berührung (Tough-Sreen) betätigbar sind.

4. Bediengerät nach Anspruch 2, dadurch gekennzeichnet, daß die auf dem Bildschirm (11) abgebildeten Bedienelemente (13 bis 16) durch Anklicken, z.B. durch Mausklick, betätigbar sind.

5. Bediengerät nach Anspruch 1, dadurch gekennzeichnet,
- däß die Bedienoberfläche ein Bedienungsfeld (19) mit herkömmlich ausgebildeten und in fester räumlicher Zuordnung angeordneten Drucktasten (20) ist, die mit dem die Bedienelemente (20) softwaremäßig enthaltenden Speicher (12) verbunden sind, und
- daß beim Ladevorgang die jeweils gewünschten Bedienelemente (20) softwaremäßig beliebigen Drucktasten (20) zugeordnet werden können.

6. Bediengerät nach Anspruch 5, dadurch gekennzeichnet, daß die Bedienelemente (20) mit optischen Anzeigen (a, b, c) versehen sind, durch welche die jeweilige Funktion der entsprechend einem Programm frei konfigurierten Bedienelemente sichtbar ist.

7. Bediengerät nach einem der Ansprüche 1 bis 6, gekennzeichnet durch eine Anwendung bei einer in einem Studio oder einem Übertragungswagen angeordneten Produktionseinheit (Produktionsbox 21) mit mindestens einer Bildsignalquelle (22), mit Einrichtungen zur Verarbeitung der Bildsignale und mit Ausgängen (23) für die bearbeiteten Bildsignale,
- wobei die einzelnen Bildsignal-Verarbeitungseinrichtungen (24) als selbständige Baueinheiten unabhängig voneinander in der zentralen Operationseinheit (21) zusammengefaßt sind und
- wobei die Ein- und Ausgänge der Bildsignal-Verarbeitungseinrichtungen (24) mit einer steuerbaren Schalteinrichtung (25) verbunden sind, die eine freie Zuordnung der Bildsignal-Verarbeitungseinrichtungen (24) ermöglicht.
